# EUROPEAN PATENT APPLICATION

(11) **EP 1 254 615 A1**
(43) Date of publication of application: **06.11.2002**
(21) Application number: 01830290.1
(22) Date of filing: 03.05.2001
(51) Int. Cl.: A47B 81/06, A47B 21/04

(54) **Object-holder frame for a monitor**

(71) Applicant: Naclerio, Vincenzo, 04011 Arprilia LT (IT)
(72) Inventor: Naclerio, Vincenzo, 04011 Arprilia LT (IT)
(74) Representative: Leone, Mario

(57) **Abstract**

Object-holder frame (1) for a monitor, consisting of a main body (2) of substantially plane shape and having a first void area (3) for viewing the screen of the monitor (5), a front side (6) onto which objects (10) may be positioned, a rear side (7) in contact with the case (8) of the monitor (5) and connecting means (20, 21, 40, 41) of said frame (1) on said case (8) such as to allow the mounting and/or the dismounting of the frame with the utmost simplicity.

## Description

The present invention relates to a object-holder frame for a monitor, particularly useful to secure notes or other objects to be kept within reach.

A typical problem of office workers interacting with a computer terminal is that of always having at hand readily available information and data, like, e.g., telephone numbers, codes, etc.. Another need in suchlike situations is that of having the possibility of jotting down something on paper and constantly maintaining the note in sight as the work progresses.

Such needs are all the more felt in those working environments in which the same workstation, hence the same desk with the same terminal is used by different individuals over time.

In these cases, it becomes practically impossible to personalise the desk according to one's individual needs and to always have one's own jottings and/or notes at hand.

The art is aware of devices to be applied to the structure of a computer monitor in order to provide to the user an additional surface onto which personal or other objects may be located.

However, such devices generally consist of complex and heavy structures, often made of several parts connected thereamong and installed onto the monitor with further supporting structures fixedly anchored thereon.

The main drawback of suchlike solutions is of not allowing a simple mounting/dismounting of the device from the monitor.

Therefore, any replacement of the device, required when the workstation users take turns, proves difficult.

Hence, to date the known solutions are limited in use, and above all not easily interchangeable.

The art is also aware of devices which are fastened to the monitor with Velcro® strips.

This solution allows to detach and/or replace the device from the monitor, yet the device detaching step proves difficult to carry out, due to the high strength offered by the Velcro®.

This difficulty is further enhanced, since often several objects, rather loosely secured, are located onto such devices.

Furthermore, in order to use Velcro strips, some portions thereof must be secured with an adhesive onto the screen structure. Such portions are definitively secured onto the case of the monitor, and may not be removed without injuring the structure or anyhow leaving permanent marks thereon, with the entailed damages, at least from an aesthetic point of view.

The object of the present invention is to provide an object-holder frame for a monitor comprising a main body of substantially plane shape and having a first void area apt to be positioned at the screen of said monitor, a front side apt to provide a support for objects and a rear side apt to come into contact with a case of said monitor, characterised in that it comprises removable connecting means of said frame on said case.

The main advantage of the object-holder frame according to the present invention is provided by the system for the fastening thereof onto the monitor structure.

In fact, a fastening system allowing to fasten and/or remove the frame with the utmost simplicity, and with no need to exert any force, is provided.

A second advantage lies in that the frame according to the present invention is of a personalisable and interchangeable type, meaning that for a same workstation several different frames, one for each user thereof, may be provided.

A third advantage of the frame according to the present invention lies in that it does not require any particular and specific supporting structure to be prefastened to the monitor.

A fourth advantage of the frame lies in the utmost simplicity of manufacture and assembly thereof, a feature making it cost-effective and hence easy to distribute.

Further advantages, features and operation modes of the present invention will be made apparent in the following detailed description of preferred embodiments thereof, given by way of example and not for limitative purposes, making reference to the figures of the attached drawings, wherein:
figure 1 is a partially exploded perspective view of a first embodiment of the frame according to the present invention;
figure 2 is a detail of the fastening system of the frame on a monitor;
figure 3 is a perspective view illustrating a first application example of a frame according to the present invention;
figure 4A is a perspective view of a second embodiment of the frame according to the present invention;
figure 4B is a detail of the frame of Fig. 4A;
figure 5 is a perspective view of a detail of a third embodiment of the frame according to the present invention; and
figure 6 is a perspective view of a fourth embodiment of the frame according to the present invention; and
figure 7 is a perspective view related to a second application example of a frame according to the present invention.

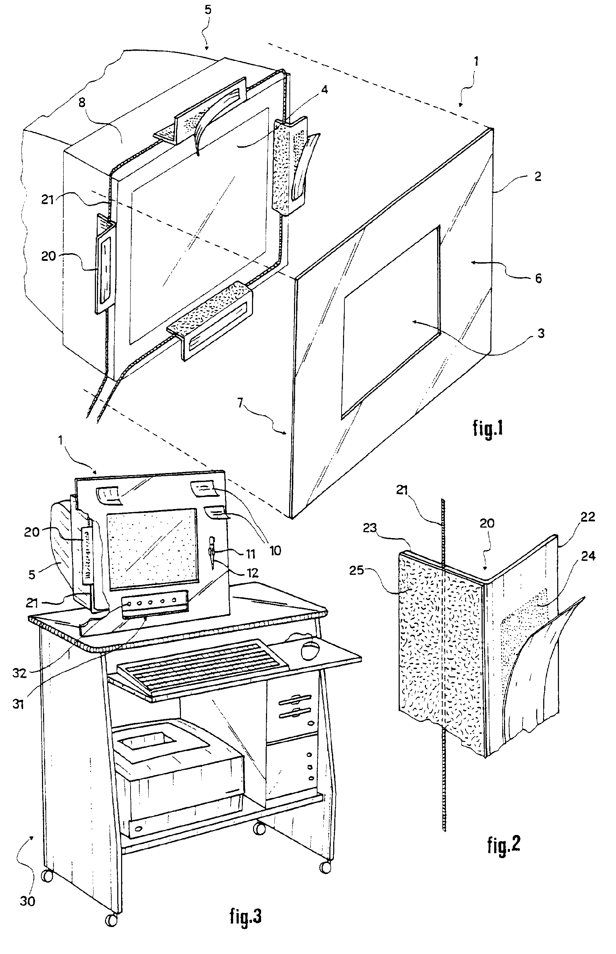

With initial reference to figure 1, an exploded perspective view of a first embodiment of the frame 1 according to the present invention is shown.

The frame 1 comprises a main body 2, shaped as a plane support having a first void area 3 of dimensions and shape such as to be positioned at the screen 4 of a monitor 5, enabling the user to fully view the screen without problems.

The main body 2 of the frame 1, once mounted, is into contact with the case 8 of the monitor 5 at a rear side 7 thereof, whereas the surface of a front side 6 may advantageously be exploited by an user as a support for his/her own personal items, notes and any other useful objects.

The frame 1 comprises removable connecting means 20, 21, 40, 41 apt to be connected onto the rear side 7 of the main body 2.

Such connecting means allows to removably connect the frame 1 to the case 8, so as to allow a simple and ready interchangeability of possible different frames onto the same monitor.

According to such first embodiment, the connecting means comprises one or more supporting members 20, each thereof being connected onto the rear side 7 of the frame 1 in a predetermined position.

Each supporting member 20 substantially consists of a plane support bent so as to have an L-shaped cross section.

The subsequent figure 2 is a view of a detail of said supporting member 20.

Hence, the supporting member 20 has a first edge 22 apt to be fastened to the main body 2 of the frame and a second edge 23 to be anchored onto the case 8 of the monitor.

According to such first embodiment the first edge 22 comprises an adhesive area 24 apt to adhere on said main body 2. Thus, the exact position wherein to fasten each of the supporting members 20 may advantageously be selected, e.g., in light of the outside dimensions of the case 8.

At the second edge 23, an area 25 apt to frictionally engage to the surface of the case 8 so as to generate a friction sufficing to prevent an easy shifting or falling of the frame is advantageously provided.

In the preferred embodiment four supporting members 20, each to be positioned on a corresponding side of the monitor 5, are provided.

The four members 20 are maintained in contact with the case itself with a fastening member 21, in particular an elastic string. In the preferred embodiment such string 21 is advantageously let through inside of the supporting members themselves, in corresponding dedicated seats.

The string 21 is let through the case 8 and then tied so as to force the supports 20 against the surface of the case 8.

Such fastening system proves particularly useful and advantageous in presence of a need to mount/dismount a frame from the same monitor, e.g., since more users have to subsequently use the same workstation, each thereof wishing to always have at hand personal objects, notes, etc.

Using this system, each user may have a personalised frame to use during a shift.

The subsequent figure 3 shows a workstation 30. Onto the monitor 5 of the computer a frame 1 is mounted, several note sheets 10 being, by way of example, secured thereon.

It is understood that onto the frame 1 even pens, pencils, and other common deskwork objects may lie.

Supporting means 11 of such objects, like, e.g., elastic strings, clasp systems or the like may advantageously be provided therefor.

A second void area 31 may advantageously be provided onto the frame 1, so as to make it possible for an user to use the controls 32 of the monitor 5, the former usually being located at the front thereof.

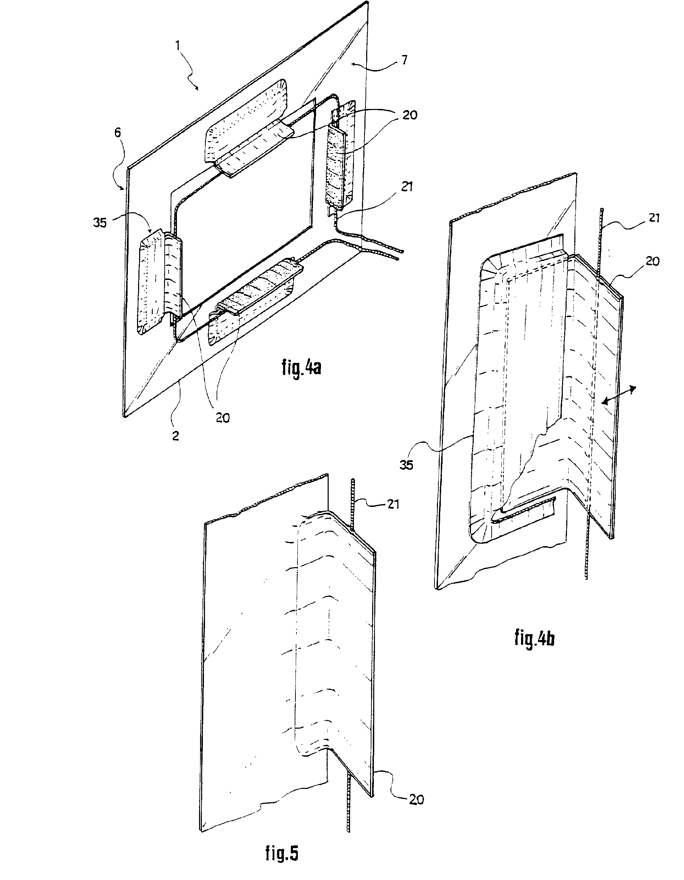

The subsequent Figs. 4A and 4B are a perspective view of a second embodiment of an object-holder frame according to the present invention and of a detail thereof, respectively.

According to such second embodiment, the supporting members 20 are not fastened onto the rear side 7 of the frame in a predetermined position, but rather inserted in corresponding seats 35, obtained just thereon.

Thus, the members 20 may slide within such seats in order to better fit the dimensions of the monitor onto which the frame is installed.

Alternatively, as it is shown in the detail of figure 5 which relates to a third embodiment, the members 20 may directly be obtained onto the rear side 7 of the main body 2, e.g., during the manufacturing stage thereof. Thus, the assembling step of the frame is further simplified, though of course frames specifically designed for the various commercially available types of monitors should be provided.

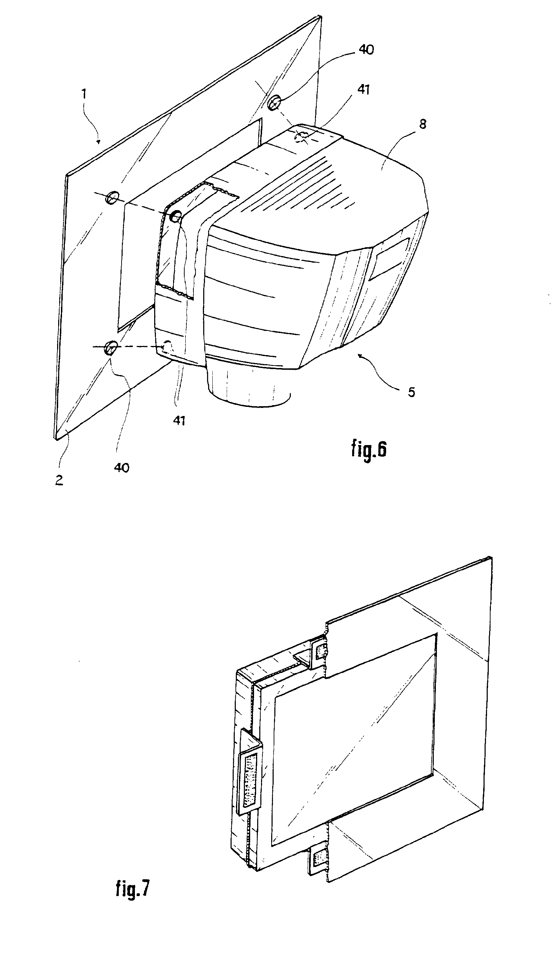

The subsequent figure 6 shows a fourth embodiment of a frame according to the present invention.

Such fourth embodiment provides the presence of magnetic members 40, fastened to the main body 2 of the frame 1, e.g., at the four corners thereof.

To the magnetic members 40, respective metallic members 41 located onto the case 8 of the monitor will correspond. Such metallic members 41 may advantageously be provided directly at the manufacturing stage of the monitor, hence making it directly compatible with a frame according to the present invention.

Of course, alternatively to the magnetic members 40, technically equivalent members, like, e.g., snap fasteners or clasping members may be provided.

For the sake of completeness, figure 7 shows a further application example of a frame according to the present invention.

In fact, it is understood that the frame according to the present invention may be used with different monitor types, even with the latest-generation ones, in particular of the plasma or LCD type, as shown in the figure.

The present invention has hereto been described according to preferred embodiments thereof given by way of example and not for limitative purposes.

It is understood that other embodiments thereof may be envisaged, all however falling within the protective scope thereof, as defined in the appended claims.

## Claims

1. An object-holder frame (1) for a monitor comprising a main body (2) of substantially plane shape and having a first void area (3) apt to be positioned at the screen (4) of said monitor (5), a front side (6) apt to provide a support for objects (10) and a rear side (7) apt to come into contact with a case (8) of said monitor (5), **characterised in that** it comprises removable connecting means (20, 21, 40, 41) of said frame (1) on said case (8).

2. The frame according to claim 1, wherein said connecting means comprises one or more supporting members (20) of said main body (2), each supporting member of said one or more supporting members (20) being apt to be connected at a predetermined position of said rear side (7).

3. The frame according to claim 2, wherein each supporting member of said one or more supporting members consists of a plane support (20) bent so as to have an L-shaped cross section, said support having a first edge (22) apt to be fastened to the main body (2) and a second edge (23) apt to be put in contact with said case (8).

4. The frame according to claim 3, wherein said first edge (22) comprises an adhesive area (24) apt to adhere on said main body (2).

5. The frame according to claim 3, wherein said first edge (22) is apt to be inserted in a corresponding seat (35) obtained on said main body (2).

6. The frame according to claim 5, wherein said first edge (22) is apt to slide inside of said seat (35).

7. The frame according to any one of the claims 3 to 6, wherein said second edge (23) comprises an area (25) apt to frictionally engage to said case (8) when into contact therewith.

8. The frame according to any one of the claims 2 to 7, wherein said connecting means comprises a fastening member (21) apt to cooperate with said one or more supporting members (20) so as to removably maintain in position the frame (1) on said case (8).

9. The frame according to claim 8, wherein said fastening member is an elastic string (21).

10. The frame according to claim 9, wherein said elastic string (21) is apt to slide in each of said one or more supporting members (20).

11. The frame according to claim 1, wherein said connecting means comprises one or more magnetic members (40) located on said main body (2) and apt to cooperate with corresponding metallic members (41) located on said case (8).

12. The frame according to any one of the preceding claims, further comprising object-holding means (11).

13. The frame according to any one of the preceding claims, further comprising a void area (31) at controls (32) of said monitor (5), for the use of said controls (32).
